# FASCICULE DE BREVET EUROPEEN

(11) **EP 1 899 212 B1**
(45) Date de publication et mention de la délivrance du brevet: **24.09.2008**
(21) Numéro de dépôt: 06723699.2
(22) Date de dépôt: 24.03.2006
(51) Int. Cl.: B62D 6/00, B62D 7/15

(54) **COMMANDE DE DIRECTION DE VÉHICULE SANS LIAISON MÉCANIQUE ENTRE VOLANT ET ROUES DIRECTRICES**
FAHRZEUGLENKSTEUERSYSTEM OHNE MECHANISCHES GESTÄNGE ZWISCHEN DEM LENKRAD UND DEN GELENKTEN RÄDERN
VEHICLE STEERING CONTROL SYSTEM COMPRISING NO MECHANICAL LINKAGE BETWEEN THE STEERING WHEEL AND THE STEERED WHEELS

(30) Priorité: 01.04.2005 FR 0503276
(43) Date de publication de la demande: 19.03.2008
(73) Titulaire: Michelin Recherche et Technique S.A., 1763 Granges-Paccot (CH)
(72) Inventeur: AUGUET, Thierry, CH-1608 Chapelle Glâne (CH); SEBE, Marc, 1740 Neyruz (CH)
(74) Mandataire: Lasson, Cédric Y. M.
(86) Numéro de dépôt international: PCT/EP2006/002719
(87) Numéro de publication internationale: WO 2006/103029

(56) Documents cités:
- WO-A-02/090169
- WO-A-20/04080782
- DE-A- 10 221 721
- US-A- 5 348 111
- US-A- 6 155 377
- US-B2- 6 865 461

## Description

### DOMAINE DE L'INVENTION

La présente invention se rapporte à la direction des véhicules automobiles, plus particulièrement aux systèmes de direction sans liaison mécanique entre l'organe de commande (en général un volant) et la ou les roues directrices. Cette architecture de système de direction est tout particulièrement appropriée dans l'hypothèse d'une direction à commande électrique.

### ETAT DE LA TECHNIQUE

Dans l'état actuel de la technique, la commande de direction d'un véhicule automobile de tourisme se fait la plupart du temps au moyen d'un volant mécaniquement relié aux roues directrices. Le conducteur agit par rotation sur le volant dans un sens ou dans l'autre pour orienter le véhicule dans une direction ou dans une autre. De cette façon, le conducteur confère un mouvement de lacet au véhicule. La direction est le plus souvent assistée et les assistances électriques de direction tendent à remplacer les assistances hydrauliques, sans supprimer la liaison mécanique entre volant et roues directrices.

Par ailleurs, il se développe de plus en plus des moyens de commande purement électrique pour l'ensemble des actionneurs d'un véhicule automobile. Dans le cas de la direction, on désigne cette technologie par l'expression anglo-saxonne très populaire « steer by wire ». Cela consiste à remplacer par des liaisons électriques les liaisons qui à l'heure actuelle sont en général mécaniques, parfois hydrauliques, entre la commande de direction (par exemple un volant) et les roues directrices. Les roues directrices sont reliées à un ou des actionneurs électriques capables de provoquer et de contrôler à tout moment le braquage des roues directrices. Il n'y a donc aucune liaison mécanique reliant en braquage les roues directrices et le volant. Les commandes faites par le conducteur du véhicule sur son volant sont transformées en signal électrique. Les actionneurs électriques reçoivent eux-mêmes un signal électrique. L'ensemble du système de direction est géré par un contrôleur capable de piloter les actionneurs électriques de façon appropriée.

L'avantage de cette technologie est qu'elle se marie de façon idéale avec les progrès de l'électronique, qui permettent des asservissements de plus en plus sophistiqués et qui permettent de placer le braquage des roues non seulement sous le contrôle d'une commande manuelle exercée par le conducteur du véhicule, mais aussi sous le contrôle d'un système de sécurité qui analyse en permanence la situation réelle du véhicule et introduit les correctifs nécessaires pour maintenir la stabilité de fonctionnement du véhicule. Ainsi par exemple, on peut imprimer aux roues directrices un angle de braquage qui tient compte non seulement de la commande du conducteur du véhicule mais aussi de paramètres dynamiques observés sur le véhicule, par exemple afin d'atténuer un sous-virage ou d'empêcher un sur-virage.

Les systèmes de commande de direction par voie purement électrique ouvrent en outre de nouvelles possibilités pour la construction des véhicules puisque l'on n'a plus la contrainte du volume et de l'emplacement de la colonne de direction mécanique. Cela permet par exemple plus facilement de réaliser des véhicules tantôt à conduite à droite et tantôt à conduite à gauche. La disparition de la colonne de direction améliore aussi la sécurité du conducteur.

L'état de la technique connaît déjà de nombreuses propositions pour implanter tous les éléments nécessaires pour permettre effectivement le braquage des roues. Le brevet US 5,347,458 propose un dispositif électrique pour la commande des roues directrices et la construction d'une réaction au volant. La demande proposée dans ce brevet tient compte de l'accélération transversale et de l'accélération de lacet du véhicule. Le brevet US 5,348,111 propose un système de direction dont la commande inclut non seulement l'accélération transversale et l'accélération de lacet du véhicule, mais également la vitesse longitudinale du véhicule. On voit que les paramètres dont tiennent compte les systèmes de direction électrique déjà connus dans l'état de la technique sont l'accélération transversale, l'accélération de lacet et la vitesse du véhicule.

Parmi les latitudes nouvelles ou facilitées par un système de direction électrique, on peut encore citer le fait de prévoir plus facilement que toutes les roues d'un véhicule soient directrices. A titre d'illustration, le brevet US 6,192,304 propose un système de direction électrique pour un véhicule à quatre roues toutes directrices. De même, le brevet US 6,549,835 propose également un système de direction électrique pour véhicules à quatre roues directrices dont la commande utilise en plus un dispositif de vision.

Quelle que soit la sophistication des systèmes de commande de la direction d'un véhicule, notamment d'un point de vue de l'intervention de systèmes de sécurité pour éviter que le véhicule quitte une trajectoire normale de fonctionnement, en particulier pour les systèmes de direction où toutes les roues sont directrices, il se pose toujours le problème d'une commande qui soit robuste, agréable pour le conducteur, pour calculer l'angle auquel on va braquer chacune des roues directrices en fonction des ordres du conducteur, et ce problème est mal résolu dans l'état de la technique.

En particulier, il est désirable de se prémunir contre les conséquences fâcheuses qu'une action du conducteur d'une ampleur trop importante pourrait avoir sur la stabilité du véhicule.

### BREVE DESCRIPTION DE L'INVENTION

Pour résoudre ce problème, l'invention propose un système de commande de direction pour véhicule terrestre comportant au moins une roue avant et une roue arrière, toutes les roues étant directrices, comportant un organe de commande à la disposition d'un conducteur pour agir sur la direction du véhicule, ledit organe de commande délivrant un signal de braquage demandé quantifié en amplitude et en direction, ledit système de commande de direction comportant au moins un actuateur pour agir sur l'angle de braquage de la au moins une roue directrice avant et au moins un actuateur pour agir sur l'angle de braquage de la au moins une roue directrice arrière, ledit système de commande de direction comportant un contrôleur utilisant comme variables d'entrée au moins 1a vitesse du véhicule et ledit signal de braquage demandé afin de déterminer pour chacun des actuateurs un angle de pilotage selon lequel l'actuateur est piloté pour le braquage,
caractérisé en ce que le contrôleur comporte :
- une unité finale déterminant un angle de braquage équivalent sur la roue directrice d'un modèle bicycle équivalent en fonction du signal de braquage demandé puis déterminant la coordonnée transversale du centre instantané de rotation du véhicule,
- un module de pilotage du comportement en braquage du véhicule permettant de déterminer la coordonnée longitudinale du centre instantané de rotation du véhicule à partir de la vitesse du véhicule et d'une règle caractéristique de l'équilibre dynamique du véhicule,
- un bloc de détermination de l'angle de pilotage de chacune des roues directrices à partir des coordonnées longitudinale et transversale du centre instantané de rotation.

Bien que l'invention ait pour principale finalité de réaliser un système de direction à commande totalement électrique, et que donc les actionneurs de roues directrices sont dès lors électriques, il est concevable d'appliquer le moyen exposé ci-dessus, utilisant une détermination d'un rapport de démultiplication adéquat, à un système de commande de direction dans lequel les actionneurs sont hydrauliques. Nous ne reviendrons plus sur cette possibilité dans la suite.

Avant de poursuivre, soulignons que la présente invention ne s'intéresse qu'à la commande du braquage effectif de chacune des roues directrices d'un véhicule, sans s'intéresser au ressenti au volant (ou organe équivalent comme un joystick) du véhicule par le conducteur. En effet, de par l'indépendance mécanique entre les roues directrices et le volant à la disposition du conducteur du véhicule, l'effort ressenti au volant doit de toutes façons être reconstruit et créé par des moyens dédiés. Différents systèmes peuvent être imaginés, le lecteur étant renvoyé à titre seulement illustratif, par exemple, au brevet US 5,347,458 qui traite de cette question. En tout état de cause, pour assurer une certaine sensation au volant, l'homme du métier comprend qu'il est nécessaire d'installer soit un système mécanique de rappel dans la position ligne droite, comme un simple ressort, soit un système plus sophistiqué comportant par exemple un moteur électrique piloté de façon appropriée pour transmettre un effort au volant, effort qui soit pertinent vis-à-vis de l'attitude du véhicule et/ou des commandes du pilote.

Ainsi, de par l'indépendance mécanique entre la commande en braquage des roues directrices et l'action du conducteur sur son volant (ou organe équivalent), les deux aspects, à savoir d'une part la commande en braquage effectif des roues directrices et d'autre part le pilotage d'un dispositif mécaniquement couplé au volant, peuvent être traités séparément, même s'ils interagissent. Il est possible de traiter l'aspect commande de braquage des roues directrices sans traiter l'aspect de reconstruction d'un certain ressenti au volant, ou l'inverse.

La présente invention ne s'intéresse qu'à la commande en braquage des roues, et elle est potentiellement compatible avec une grande variété de principes de reconstruction d'effort au volant.

Dans une mise en oeuvre particulière, la règle caractéristique de l'équilibre dynamique du véhicule comprend la sélection d'une valeur d'accélération transversale γ _{y max} maximale du véhicule. En particulier, ce paramètre peut avoir une valeur constante dans le système de commande de direction tel qu'implanté sur un véhicule. Par exemple, par construction, l'accélération transversale γ _{y max} maximale retenue pour le véhicule vaut 1G (G est la valeur de l'accélération de la pesanteur et vaut approximativement 9,81 m/s²). Pour aboutir à ce choix, on se base sur le fait connu expérimentalement que, sur sol sec normalement adhérant, pour un véhicule de tourisme standard, une accélération de 1 G correspond sensiblement à la valeur maximale à laquelle les pneus restent capables de transmettre au sol les efforts horizontaux aussi bien dans le sens longitudinal que dans le sens transversal.

Notons que ce paramètre peut en fait être ajusté dans des phases de mise au point du véhicule, par test et/ou simulation. C'est aussi un intérêt de l'invention que de permettre de concevoir une commande de direction pour un système purement électrique qui puisse être facilement mis au point en fonction des spécificités de chacun des véhicules que l'on souhaite équiper d'une telle direction électrique. Par exemple, un véhicule à caractère sportif, dont le centre de gravité est très bas, dont les pneumatiques sont capables de développer des poussées de dérive importantes et bénéficient de très grandes valeurs d'adhérence, pourra fonctionner avec un paramètre d'accélération transversale de valeur supérieure à 1G. Par ailleurs, un véhicule à caractère familial, plus particulièrement les véhicules monospace ou les véhicules de loisirs, dont le centre de gravité est assez élevé par rapport à la voie de ces véhicules, devra fonctionner avec des valeurs maximales d'accélération transversale beaucoup plus faibles, peut être inférieures à 1G, pour rester dans des conditions de sécurité.

Dans une variante particulière de mise en oeuvre de l'invention, on fait le choix que, à toutes les vitesses de déplacement du véhicule, le conducteur peut utiliser son volant ou tout autre organe approprié sur la totalité de la plage, c'est-à-dire d'une butée à l'autre. Par exemple, il peut braquer son volant d'un demi-tour au maximum, aussi bien vers la gauche que vers la droite. Dans cette variante particulière, la démultiplication existant entre le volant et les roues directrices est à tout instant obtenue par calcul, tenant compte de la vitesse longitudinale du véhicule. Bien entendu, plus la vitesse du véhicule est faible et plus l'angle effectif de braquage des roues directrices peut être important, jusqu'au maximum mécaniquement possible compte tenu du dessin des pièces mécaniques, à des vitesses proches de zéro. Et plus la vitesse du véhicule est élevée, plus l'angle maximal de braquage autorisé par le contrôleur sera rendu faible, même pour une amplitude maximale d'angle au volant.

Avantageusement, l'invention peut également être mise en oeuvre si l'accélération transversale maximale est non pas un paramètre choisi une fois pour toutes, qui demeure constant lors du fonctionnement du véhicule, mais est un paramètre qui est lui-même calculé en temps réel en fonction des conditions d'utilisation du véhicule. A titre d'illustration, le lecteur est renvoyé à la demande de brevet US 2002/0157746 qui décrit comment on peut acquérir en temps réel une estimation du coefficient d'adhérence prévalant dans le contact pneu/chaussée. Plus particulièrement, cette demande de brevet décrit comment on peut estimer la marge d'adhérence restant disponible à tout moment. Sur la base de cela et compte tenu des caractéristiques géométriques du véhicule (voie, empattement, hauteur du centre de gravité), il est possible de calculer à tout moment l'accélération transversale maximale admissible. Ainsi, on voit que l'invention est bien adaptée pour tenir compte des conditions réelles prévalant lors du déplacement d'un véhicule, ce qui est en soi un grand facteur de sécurité et d'agrément.

Pour simplifier l'exposé, on ne reviendra pas ci-dessous sur la façon dont on peut acquérir ou choisir la valeur d'accélération transversale maximale utilisée dans le système proposé par l'invention, pas plus que sur la façon dont on peut acquérir la vitesse longitudinale du véhicule ou l'angle imposé par le conducteur par ses actions sur le volant. La description suivante illustre plusieurs applications de l'invention dans le cas particulier d'un véhicule à quatre roues. Il est proposé deux mises en oeuvre de l'invention qui se distinguent par le fait que, sur un essieu directeur, l'actuateur qui commande le braquage des roues est unique ou au contraire que chaque roue directrice dispose de son propre actuateur.

### BREVE DESCRIPTION DES FIGURES

La présente invention sera mieux comprise grâce à la consultation des différents modes de réalisation décrits à l'aide des figures suivantes.
La figure 1 montre un schéma d'implantation d'un système de direction électrique sur un véhicule à quatre roues dont toutes les roues sont directrices et comportent chacune leur propre actuateur ;
La figure 2 est un schéma bloc illustrant le contrôleur selon l'invention dans l'application de la figure 1 ;
La figure 3 montre un schéma simplifié d'implantation d'un système de direction électrique sur un véhicule à quatre roues dont toutes les roues sont directrices, chacun des essieux étant commandé par un seul actionneur.

### DESCRIPTION DES MODES DE REALISATION PREFERES DE L'INVENTION

Avant de poursuivre, convenons des différentes notations suivantes :
- la référence « 1 » désigne en général une roue directrice ;
- lorsqu'une référence est accompagnée d'un indice « _{Av} », cela signifie que l'objet désigné par la référence concerne l'avant du véhicule et lorsqu'une référence est accompagnée d'un indice « _{Ar} », cela signifie que l'objet désigné par la référence concerne l'arrière du véhicule ;
- lorsqu'une référence est accompagnée d'un indice « _{D} », cela signifie que l'objet désigné par la référence concerne le côté droit du véhicule et lorsqu'une référence est accompagnée d'un indice « _{G} », cela signifie que l'objet désigné par la référence concerne le côté gauche du véhicule ;
- « θₘₐₓ » se rapporte à la plage maximale dans laquelle le conducteur du véhicule peut manoeuvrer un organe de commande pour agir sur la direction du véhicule ; plus particulièrement, dans toutes les mises en oeuvres proposées, il s'agit d'un volant que l'on manoeuvre sur une plage angulaire prédéterminée (la notion d'angle n'est pas limitative dans la mesure où l'on peut substituer au volant tout dispositif équivalent comme un joystick ou un curseur) ; le volant est manoeuvré de -θₘₐₓ à +θₘₐₓ et « θ » désigne toute valeur particulière caractérisant la commande que le conducteur impose, caractérisée en amplitude et en signe ;
- étant noté que tous les véhicules auxquels peut s'appliquer l'invention peuvent être modélisés par un modèle bicycle équivalent, type de modélisation bien connue, on considérera qu'une seule roue de ce modèle est directrice et on désigne par « β » l'angle de braquage de cette roue directrice, et par « βₘₐₓ » la valeur maximale que peut prendre cet angle.

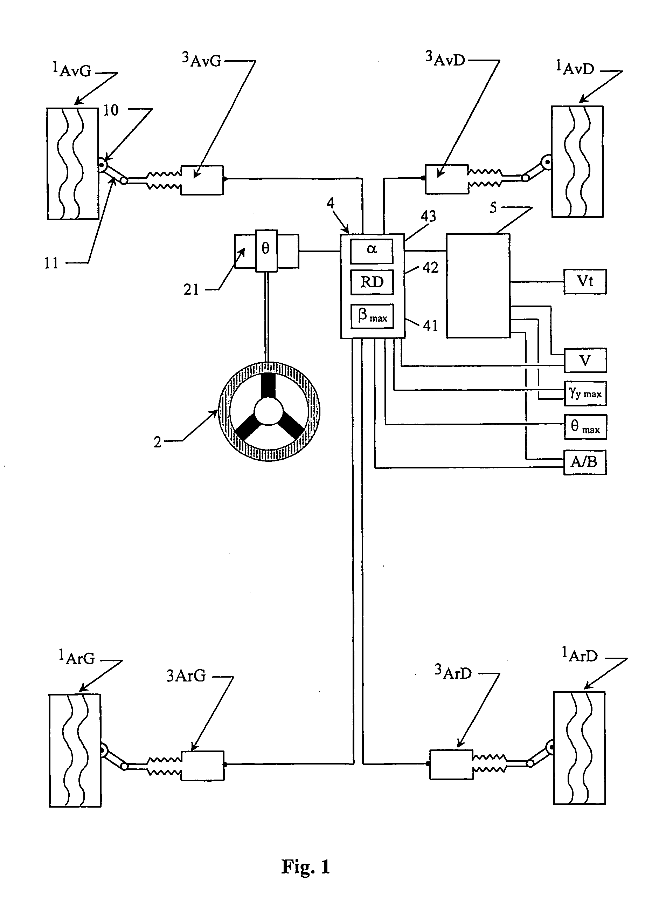

A la figure 1, on a schématisé un véhicule à quatre roues toutes directrices. Les roues sont notées 1_{AvG} pour la roue avant gauche, 1_{AvD} pour la roue avant droite, 1_{ArG} pour la roue arrière gauche et 1_{ArD} pour la roue arrière droite. Les roues directrices sont montées sur un porte-roue (non visible) et braquent autour d'un axe de pivot 10. Un levier 11 de commande du braquage est monté solidaire du porte-roue. Chaque roue directrice est braquée par un actionneur électrique 3_{AvG}, 3_{AvD}, 3_{ArG}, 3_{ArD} relié d'une part à la caisse ou au châssis du véhicule et d'autre part au levier 11, pour commander l'angle de braquage de la roue considérée. Chaque actionneur électrique 3_{AvG}, 3_{AvD}, 3_{ArG}, 3_{ArD} comporte par exemple un dispositif vis/écrou (non représenté), actionné par un moteur électrique rotatif. La vis du dispositif vis/écrou est reliée au levier 11 de commande de braquage. Chaque actionneur comporte de préférence un capteur de position pour, au besoin par construction géométrique et calculs associés, connaître à partir de la mesure délivrée par le capteur de position la position angulaire exacte de la roue directrice considérée. A titre d'exemple, on peut utiliser les actionneurs électriques décrits dans le brevet US6820715.

On voit aussi un volant 2 relié mécaniquement à un dispositif 21 de mesure de l'angle θ au volant. Un contrôleur 4 permet de piloter le braquage des roues directrices. Le contrôleur 4 utilise les variables d'entrée vitesse du véhicule V et signal de braquage θ tel que résultant des actions du conducteur sur sa commande. Le contrôleur 4 utilise aussi les paramètres amplitude maximale θₘₐₓ caractérisant la commande à la disposition du conducteur et accélération transversale γ _{y max} que peut supporter le véhicule.

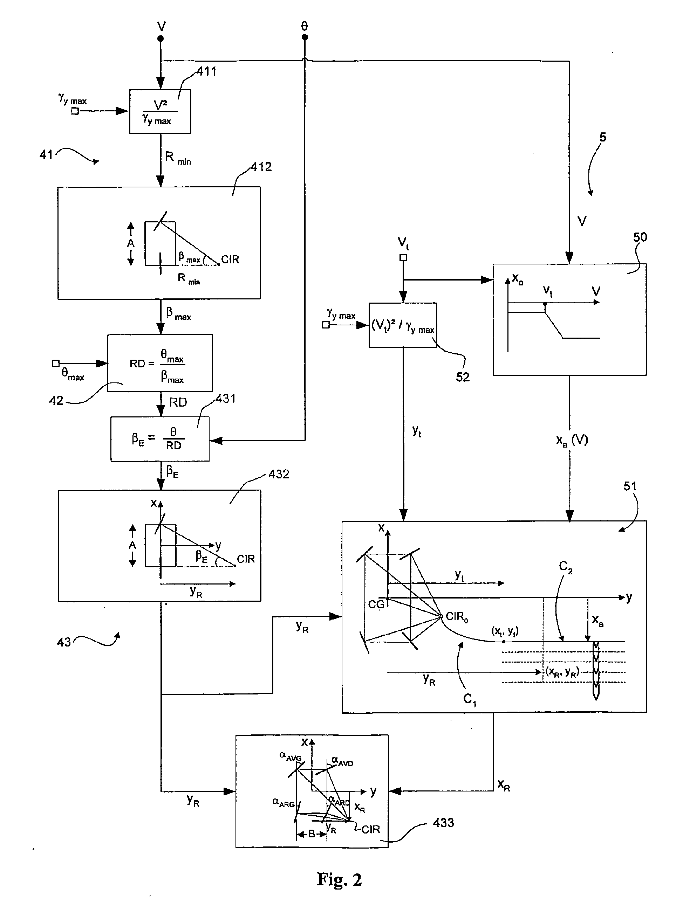

La figure 2 décrit plus en détails l'agencement du contrôleur 4. Les paramètres qu'utilise le contrôleur 4 sont symbolisés à 1a figure 2 par de petits carrés et les variables par des points. A partir de la valeur instantanée de la vitesse longitudinale V du véhicule et compte tenu du paramètre d'accélération transversale maximale γ_{y max}, une première unité 41 détermine, au moins en fonction de la vitesse du véhicule V, un angle de braquage maximal (βₘₐₓ) sur la roue directrice unique d'un modèle bicycle équivalent du véhicule.

A cette fin, avantageusement, un premier bloc 411 de la première unité 41 du contrôleur 4 détermine le rayon minimal Rₘᵢₙ autour duquel peut s'inscrire la trajectoire du véhicule en procédant à l'opération mathématique suivante : le rayon minimal Rₘᵢₙ est proportionnel au carré de la vitesse V divisé par l'accélération transversale maximale γ_{y max}. Ensuite, par exemple, un deuxième bloc 412 de la première unité 41 du contrôleur 4 détermine l'angle de braquage maximal d'essieu βₘₐₓ rapporté à une modélisation par bicycle équivalent, sur la base de la valeur d'empattement A du véhicule et du rayon minimal Rₘᵢₙ calculé précédemment.

A la figure 2, on voit que le deuxième bloc 412 comporte la représentation schématique d'un véhicule bicycle (équivalent d'un véhicule à quatre roues souvent suffisant en modélisation) dans lequel la roue arrière est non directrice et la roue avant est directrice. On voit aussi les axes de référence x et y par rapport auxquels on va déterminer les coordonnées longitudinale (axe x) et transversale (axe y) du centre instantané de rotation CIR. On choisit de respecter le principe de l'épure de Jeantaud. Cela entraîne que le lieu du centre instantané de rotation du véhicule est situé sur la droite perpendiculaire au plan de la roue arrière et passant par le centre de la roue arrière du véhicule. On obtient le centre instantané de rotation limite CIRₗᵢₘ en reportant sur ledit lieu la valeur de rayon minimal Rₘᵢₙ à partir du plan de la roue arrière. Le centre instantané de rotation limite CIRₗᵢₘ étant ainsi connu, on relie par un segment de droite le centre de l'aire de contact de la roue avant et ledit centre instantané de rotation limite et on obtient l'angle de braquage maximal d'essieu avant βₘₐₓ entre ce dernier segment de droite et la prolongation de l'essieu arrière.

Une deuxième unité 42 détermine un rapport de démultiplication RD entre la commande à la disposition du conducteur du véhicule et la ou les roues directrices. Rappelons que cette caractéristique est simplement optionnelle. De façon non limitative, on considère pour cela qu'à la vitesse V le rapport de démultiplication RD est constant sur toute la plage de manoeuvre du volant. Le rapport de démultiplication que l'on va déterminer dépend de caractéristiques constructives du véhicule comme le paramètre angle θₘₐₓ, et de caractéristiques de performance du véhicule comme le paramètre accélération transversale maximale qui a permis de déterminer l'angle βₘₐₓ. On obtient le rapport de démultiplication RD en faisant en sorte que l'angle maximal des roues soit obtenu au braquage maximal du volant 2. Le rapport de démultiplication RD est obtenu par la division de ladite plage maximale θₘₐₓ de l'organe de commande par ledit angle de braquage maximal βₘₐₓ. Le rapport de démultiplication RD ainsi calculé permet de ne jamais dépasser l'accélération transversale maximale dont est capable le véhicule à la vitesse à laquelle il se déplace lorsque le conducteur braque son volant à fond. Dès lors, l'invention permet de ne jamais dépasser les conditions de stabilité de la trajectoire du véhicule.

Enfin, une unité finale 43 détermine les angles de braquage α de toutes les roues directrices 1 en fonction dudit rapport de démultiplication RD et dudit signal de braquage demandé θ. Un premier bloc 431 de l'unité finale 43 détermine d'abord un angle de braquage équivalent β_{E} sur la roue directrice du modèle bicycle équivalent. Cet angle de braquage équivalent β_{E} est très simplement obtenu par la division dudit signal de braquage θ tel que résultant de la commande opérée par le conducteur par le rapport de démultiplication RD.

Un deuxième bloc 432 procède aux opérations suivantes. Dans cet exemple, seul l'essieu avant étant directeur, pour respecter l'épure de Jeantaud et comme exposé ci-dessus, le lieu du centre instantané de rotation du véhicule est une droite alignée avec l'axe arrière du véhicule. Sur le modèle bicycle, on braque la roue directrice dudit angle de braquage équivalent β_{E} puis on repère l'intersection entre une droite perpendiculaire au plan de la roue non directrice du modèle bicycle et une droite perpendiculaire au plan de la roue directrice du modèle bicycle ainsi braquée dudit angle de braquage équivalent β_{E}. Cette intersection fournit pour la suite des calculs la coordonnée transversale y_{R} du centre instantané de rotation du véhicule.

Un troisième bloc 433 permet de déterminer l'angle de pilotage α de chacune des roues directrices sur la base des calculs effectués dans le deuxième bloc 432 et sur la base des calculs effectués dans un module de pilotage 5 du comportement en braquage du véhicule qui permet un calcul dynamique de la coordonnée longitudinale x_{R} du centre instantané de rotation CIR du véhicule.

A cette fin, par exemple, une unité de gestion de la dynamique du véhicule 51, implantée dans le module de pilotage 5 du comportement en braquage du véhicule, comprend comme élément de la règle caractéristique de l'équilibre dynamique du véhicule le calcul d'une courbe de raccordement C1 entre un centre initial de rotation (CIR₀) à vitesse nulle et un centre instantané de rotation de transition (xₜ, yₜ) à une vitesse de transition Vₜ, la courbe de raccordement étant tangente à une droite C2 parallèle à un essieu du véhicule. De façon avantageuse, la courbe de raccordement est une ellipse.

Il est très avantageux que la coordonnée transversale yₜ du centre instantané de rotation à ladite vitesse de transition soit déterminée en utilisant comme paramètre d'entrée le choix d'une valeur d'accélération transversale γ _{y max} maximale, dans la règle caractéristique de l'équilibre dynamique du véhicule. Une unité de base 52, implantée dans le module de pilotage 5 du comportement en braquage du véhicule, assure l'exploitation de ce paramètre accélération transversale maximale γ _{y max} par exemple d'une façon tout à fait similaire à ce qui a été exposé à propos du premier mode de réalisation. L'accélération transversale γ _{y max} maximale est soit un paramètre de réglage une fois pour toutes du comportement du véhicule, paramètre maintenu constant lors du fonctionnement du véhicule, soit un paramètre lui-même calculé en temps réel.

Par ailleurs, on sait que pour favoriser la stabilité à haute vitesse, on a intérêt à déplacer vers l'arrière du véhicule la position du centre instantané de rotation CIR d'autant plus que la vitesse est élevée. Tout au contraire, pour favoriser la maniabilité du véhicule, il est souhaitable de déplacer la position du centre instantané de rotation CIR du véhicule vers l'avant de l'essieu arrière d'autant plus que la vitesse est basse. Le choix précis de la coordonnée xₐ est ajusté lui aussi par exemple expérimentalement, ce qui est exprimé à la figure 2 par un diagramme 50 programmé dans le module de pilotage 5 et donnant par lecture directe la valeur de xₐ en fonction de la vitesse V du véhicule. Ainsi, la coordonnée longitudinale x_{R} du centre instantané de rotation du véhicule est égale à une coordonnée longitudinale xₐ fonction de la vitesse V du véhicule au-delà de la vitesse de transition Vₜ.

La coordonnée longitudinale x_{R} du centre instantané de rotation du véhicule est déterminée par le report de la coordonnée transversale y_{R} sur le diagramme 51, ce qui permet de lire la coordonnée longitudinale x_{R} sur un lieu comprenant la courbe de raccordement C1 et ladite droite C2 parallèle à un essieu du véhicule (selon le braquage demandé θ) pour toute vitesse V du véhicule inférieure à la vitesse de transition Vₜ, et, pour toute vitesse V du véhicule supérieure à la vitesse de transition Vₜ, par la lecture de la coordonnée longitudinale correspondante toujours située sur la droite C2 (x_{A} = x_{R}).

Le troisième bloc 433 permet de déterminer l'angle de pilotage α de chacune des roues directrices de la façon suivante. A partir des coordonnées transversale y_{R} et longitudinale x_{R} du centre instantané de rotation CIR, on obtient les angles de pilotage α_{1AvG}, α_{1AvD}, α_{1ArG} et α_{1ArD} des quatre actionneurs électriques par exemple en respectant le principe de l'épure de Jeantaud. Les angles de pilotage α_{1AvG}, α_{1AvD}, α_{1ArG} et α_{1ArD} sont formés par l'intersection d'une droite parallèle à la direction transversale au véhicule (axe y) et une droite passant d'une part par le centre de l'aire de contact respectivement des roues 1_{AvG,} 1_{AvD,} 1_{ArG}, 1_{ArD} et d'autre part chaque fois par le CIR dont les coordonnées sont (x_{R}, y_{R}). Sachant que l'on reporte la coordonnée x_{R} à partir du milieu de l'empattement A et la coordonnée y_{R} à partir du milieu de la voie B du véhicule, on trace des segments qui relient ledit CIR au centre de chacune desdites roues directrices. Il suffit alors d'orienter les roues directrices pour qu'elles soient perpendiculaires auxdits segments et on obtient les angles de pilotage α_{1AvG}, α_{1AvD}, α_{1ArG} et α_{1ArD} des quatre actionneurs électriques par calculs trigonométriques et géométriques programmés de façon adéquate dans l'unité de pilotage 4.

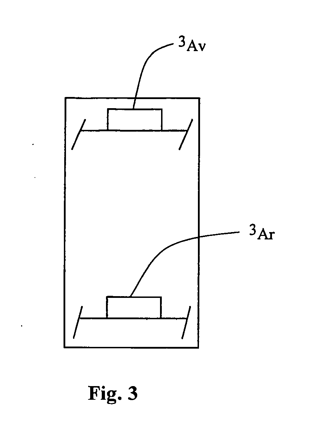

Enfin, la figure 3 représente une variante de réalisation dans laquelle les deux essieux directeurs sont placés chacun sous le contrôle d'un seul actionneur de direction 3_{Av}, respectivement 3_{Ar}. A partir de l'information donnée au mode de réalisation précédent dans lequel chacune des roues directrices comporte son propre actionneur de direction, les spécificités de ce mode de réalisation sont les suivantes.

Un contrôleur adéquat détermine les coordonnées longitudinale x_{R} et transversale y_{R} du centre instantané de rotation CIR comme cela a été expliqué ci-dessus. Ensuite, au lieu de calculer quatre angles de pilotage, on en calcule deux, l'angle de pilotage α_{Av} de l'actionneur 3_{Av} d'essieu avant et l'angle de pilotage α_{Ar} de l'actionneur 3_{Ar} d'essieu arrière par calculs trigonométriques appliqués au modèle bicycle du véhicule.

Signalons enfin que, aux angles de pilotage α déterminés selon l'un ou l'autre des exemples décrits ci-dessus, le contrôleur de trajectoire peut superposer des éventuels correctifs déterminés par une fonction de contrôle de la trajectoire et détermine l'angle corrigé de braquage pour chacune des roues, ledit angle corrigé de braquage de roue comportant une composante résultant du signal de braquage demandé θ et une composante de correction.

## Revendications

1. Système de commande de direction pour véhicule terrestre comportant au moins une roue avant et une roue arrière, toutes les roues étant directrices (1), comportant un organe de commande (2) à la disposition d'un conducteur pour agir sur la direction du véhicule, ledit organe de commande délivrant un signal de braquage demandé (θ) quantifié en amplitude et en direction, ledit système de commande de direction comportant au moins un actuateur (3_{Av}) pour agir sur l'angle de braquage de la au moins une roue directrice avant et au moins un actuateur (3_{Ar}) pour agir sur l'angle de braquage de la au moins une roue directrice arrière, ledit système de commande de direction comportant un contrôleur (4) utilisant comme variables d'entrée au moins la vitesse du véhicule (V) et ledit signal de braquage demandé (θ) afin de déterminer pour chacun des actuateurs un angle de pilotage (α) selon lequel l'actuateur est piloté pour le braquage,
**caractérisé en ce que** le contrôleur comporte :
• une unité finale (43) déterminant un angle de braquage équivalent (β_{E}) sur la roue directrice d'un modèle bicycle équivalent en fonction du signal de braquage demandé (θ) puis déterminant la coordonnée transversale (y_{R}) du centre instantané de rotation (CIR) du véhicule,
• un module de pilotage du comportement (5) en braquage du véhicule permettant de déterminer la coordonnée longitudinale (x_{R}) du centre instantané de rotation du véhicule à partir de la vitesse du véhicule (V) et d'une règle caractéristique de l'équilibre dynamique du véhicule,
• un bloc (433) de détermination de l'angle de pilotage (α) de chacune des roues directrices à partir des coordonnées (x_{R}, y_{R}) longitudinale et transversale du centre instantané de rotation (CIR).

2. Système selon la revendication 1, dans lequel la règle caractéristique de l'équilibre dynamique du véhicule comprend le calcul d'une courbe de raccordement (C1) entre un centre initial de rotation (CIR₀) à vitesse nulle et un centre instantané de rotation de transition (xₜ, yₜ) à une vitesse de transition (Vₜ), la courbe de raccordement étant tangente à une droite (C2) parallèle à un essieu du véhicule, et dans lequel la coordonnée longitudinale (x_{R}) du centre instantané de rotation du véhicule est déterminée par lecture de la coordonnée transversale (y_{R}) sur un lieu comprenant 1a courbe de raccordement et ladite droite parallèle à un essieu du véhicule pour toute vitesse (V) du véhicule inférieure à la vitesse de transition (Vₜ) et dans lequel la coordonnée longitudinale (x_{R}) du centre instantané de rotation du véhicule est égale à une coordonnée longitudinale (xₐ) fonction de la vitesse (V) du véhicule au-delà de la vitesse de transition (Vₜ).

3. Système selon la revendication 2 dans lequel la courbe de raccordement (C1) est une ellipse.

4. Système selon la revendication 1 dans lequel la règle caractéristique de l'équilibre dynamique du véhicule comprend le choix d'une valeur d'accélération transversale (γ _{y max}) maximale du véhicule.

5. Système selon la revendication 2 ou 3 dans lequel la coordonnée transversale (yₜ) du centre instantané de rotation à ladite vitesse de transition est déterminée en utilisant dans la règle caractéristique de l'équilibre dynamique du véhicule le choix d'une valeur d'accélération transversale (γ _{y max}) maximale du véhicule et ladite vitesse de transition (Vₜ).

6. Système selon la revendication 4 ou 5 dans lequel le paramètre d'accélération transversale (γ _{y max}) maximale est un paramètre de réglage dudit système et conserve une valeur fixe pendant le fonctionnement dudit système de direction.

7. Système selon la revendication 4 ou 5 dans lequel le paramètre d'accélération transversale (γ _{y max}) maximale est calculé en temps réel en fonction des conditions d'utilisation du véhicule.

8. Système selon l'une des revendications 1 à 7, dans lequel ledit organe de commande étant manoeuvrable à l'intérieur d'une plage maximale (θₘₐₓ) entre une butée à gauche et une butée à droite, le contrôleur (4) comporte :
• une première unité (41) pour déterminer, au moins en fonction de la vitesse du véhicule (V), un angle de braquage maximal (βₘₐₓ) sur la roue directrice unique d'un modèle bicycle équivalent du véhicule,
• une deuxième unité (42) pour déterminer un rapport de démultiplication (RD) en fonction de ladite plage maximale (θₘₐₓ) de l'organe de commande et dudit angle de braquage maximal (βₘₐₓ),
l'unité finale (43) déterminant le ou lesdits angle(s) de braquage (α) en fonction dudit rapport de démultiplication (RD).

9. Système selon l'une des revendications 1 à 8, pour véhicule à quatre roues toutes directrices (1_{AvG}, 1_{AvD}, 1_{ArG}, 1_{ArD}), reliées mécaniquement entre elles en braquage sur chacun des essieux, le système comportant un seul actuateur par essieu (3_{Av}, 3_{Ar}), le bloc (433) de détermination de l'angle de pilotage (α) de chacune des roues directrices déterminant, à partir des coordonnées transversale et longitudinale du centre instantané de rotation, l'angle de pilotage (α_{Av} et α_{Ar}) de chacun des essieux directeurs.

10. Système selon l'une des revendications 1 à 8 pour véhicule dont toutes les roues sont directrices (1_{AvG}, 1_{AvD}, 1_{ArG}, 1_{ArD}), le système comportant un actuateur par roue directrice (3_{AvG}, 3_{AvD}, 3_{ArG}, 3_{ArD}), le bloc (433) de détermination de l'angle de pilotage (α) de chacun des roues directrices déterminant, à partir des coordonnées transversale et longitudinale du centre instantané de rotation, l'angle de pilotage (α_{1AvG}, α_{1AvD}, α_{1ArG} et α_{1ArD}) de chacune des roues directrices.

11. Système selon l'une des revendications 1 à 10, dans lequel ledit organe de commande à la disposition d'un conducteur pour introduire une demande de braquage délivre un signal de braquage demandé (θ) électrique, dans lequel chacun des actuateurs (3) est électrique.

12. Système de contrôle de trajectoire d'un véhicule dans lequel, aux angles de pilotage (α) déterminés par un système de commande de direction selon l'une des revendications 1 à 11, le contrôleur de trajectoire superpose des éventuels correctifs déterminés par une fonction de contrôle de la trajectoire et détermine l'angle corrigé de braquage pour chacune des roues, ledit angle corrigé de braquage de roue comportant une composante résultant du signal de braquage demandé (θ) et une composante de correction.

## Claims

1. Steering control system for a land vehicle comprising at least one front wheel and one rear wheel, all the wheels being steered (1), comprising a control member (2) available to a driver for acting on the steering of the vehicle, the said control member delivering a requested steering signal (θ) quantified in terms of amplitude and direction, the said steering control system comprising at least one actuator (3_{Av}) for acting on the steering angle of the at least one front steered wheel and at least one actuator (3_{Ar}) for acting on the steering angle of the at least one rear steered wheel, the said steering control system comprising a controller (4) using as input variables at least the speed of the vehicle (V) and the said requested steering signal (θ) in order to determine for each of the actuators a control signal (α) according to which the actuator is controlled for the steering,
**characterised in that** the controller comprises:
• a final unit (43) determining an equivalent steering angle (β_{E}) of the steered wheel of an equivalent bicycle model according to the requested steering signal (θ) and then determining the transverse coordinate (y_{R}) of the instantaneous centre of rotation of the vehicle (CIR),
• a module (5) for controlling the steering behaviour of the vehicle making it possible to determine the longitudinal coordinate (x_{R}) of the instantaneous centre of rotation of the vehicle from the speed of the vehicle (V) and a rule characteristic of the dynamic equilibrium of the vehicle,
• a block (433) for determining the control angle (α) of each of the steered wheels from the longitudinal and transverse coordinates (x_{R}, y_{R}) of the instantaneous centre of rotation (CIR).

2. System according to claim 1, in which the rule characteristic of the dynamic equilibrium of the vehicle comprises the calculation of a connection curve (C1) between an initial centre of rotation (CIR₀) at zero speed and a transition instantaneous centre of rotation (xₜ, yₜ) at a transition speed (Vₜ), the connection curve being tangent to a straight line (C2) parallel to the axle of the vehicle, and in which the longitudinal coordinate (x_{R}) of the instantaneous centre of rotation of the vehicle is determined by reading the transverse coordinate (y_{R}) at a site comprising the connection curve and the said straight line parallel to an axis of the vehicle for any speed (V) of the vehicle below the transition speed (Vₜ) and in which the longitudinal coordinate (x_{R}) of instantaneous centre of rotation of the vehicle is equal to a longitudinal coordinate (xₐ) that is a function of the speed (V) of the vehicle beyond the transition speed (Vₜ).

3. System according to claim 2, in which the connection curve (C1) is an ellipse.

4. System according to claim 1, in which the rule characteristic of the dynamic equilibrium of the vehicle comprises the choice of a maximum transverse acceleration value (γ _{y max}) of the vehicle.

5. System according to claim 2 or 3, in which the transverse coordinate (yₜ) of the instantaneous centre of rotation at the said transition speed is determined using, in the rule characteristic of the dynamic equilibrium of the vehicle, the choice of a maximum transverse acceleration value (γ _{y max}) of the vehicle and the said transition speed (Vₜ).

6. System according to claim 4 or 5, in which maximum transverse acceleration parameter (γ _{y max}) is an adjustment parameter of the said system and keeps a fixed value of the functioning of the said steering system.

7. System according to claim 4 or 5, in which the maximum transverse acceleration parameter (γ _{y max}) is calculated in real time according to the conditions of use of the vehicle.

8. System according to one of claims 1 to 7, in which, the said control member being manoeuvrable within a maximum range (θₘₐₓ) between a left stop and a right stop, the controller (4) comprises:
• a first unit (41) for determining, at least according to the speed of the vehicle (V), a maximum steering angle (βₘₐₓ) on the single steered wheel of an equivalent bicycle model of the vehicle,
• a second unit (42) for determining a gearing-down ratio (RD) according to the said maximum range (θₘₐₓ) of the control member and the said maximum steering angle (βₘₐₓ),
the final unit (43) determining the steering angle or angles according to the said gearing-down ratio (RD).

9. System according to one of claims 1 to 8, for a vehicle with four wheels all steered (1_{FtL}, 1_{FtR}, 1_{RrL}, 1_{RrR}), mechanically connected to one another in terms of steering on each of the axles, the system comprising a single actuator per axle (3_{Av}, 3_{Ar}), the block (433) determining the control angle (α) of each of the steered wheels determining, from transverse and longitudinal coordinates of the instantaneous centre of rotation, the control angle (α_{Av} and α_{Ar}) of each of the steered axles.

10. System according to one of claims 1 to 8 for a vehicle where all the wheels are steered (1_{FtL}, 1_{FtR}, 1_{RrL}, 1_{RrR}), the system comprising one actuator per steered wheel (3_{FtL}, 3_{FtR}, 3_{RrL}, 3_{RrR}), the block (433) determining the control angle (α) of each of the steered wheels determining, from transverse and longitudinal coordinates of the instantaneous centre of rotation, the control angle (α_{1FtL}, α_{1FtR}, α_{1RrL} and α_{1RrR}) of each of the steered wheels.

11. System according to one of claims 1 to 10, in which the said control member available to a driver for introducing a steering request delivers an electrical requested steering signal (θ), in which each of the actuators (3) is electrical.

12. System for controlling the path of a vehicle in which, at the control angles (α) determined by a steering control system according to one of claims 1 to 11, the path controller superimposes any corrections determined by a control function of the path and determines the corrected steering angle for each of the wheels, the said corrected wheel steering angle comprising a component resulting from the requested steering signal (θ) and a correction component.

## Patentansprüche

1. Lenksteuersystem für ein Landfahrzeug, das mindestens ein Vorderrad und ein Hinterrad aufweist, wobei alle Räder gelenkte Räder (1) sind, mit einem Steuerorgan (2), das einem Fahrer zur Verfügung steht, um auf die Lenkung des Fahrzeugs einzuwirken, wobei das Steuerorgan ein in Amplitude und Richtung quantifiziertes Signal (θ) des geforderten Radeinschlags liefert, wobei das Lenksteuersystem mindestens einen Aktor (3_{Av}), um auf den Einschlagwinkel des mindestens einen gelenkten Vorderrads einzuwirken, und mindestens ein Aktor (3_{Ar}) aufweist, um auf den Einschlagwinkel des mindestens einen gelenkten Hinterrads einzuwirken, wobei das Lenksteuersystem ein Steuergerät (4) aufweist, das als Eingangsvariable mindestens die Geschwindigkeit des Fahrzeugs (V) und das Signal (θ) des geforderten Radeinschlags verwendet, um für jeden der Aktoren einen Steuerwinkel (α) zu bestimmen, gemäß dem der Aktor für den Radeinschlag gesteuert wird,
**dadurch gekennzeichnet, dass** das Steuergerät aufweist:
• eine Endeinheit (43), die einen äquivalenten Einschlagwinkel (β_{E}) auf dem gelenkten Rad eines äquivalenten Zweiradmodells in Abhängigkeit vom Signal (θ) des geforderten Radeinschlags bestimmt und dann die Querkoordinate (y_{R}) des augenblicklichen Drehpunkts (CIR) des Fahrzeugs bestimmt,
• einen Steuermodul des Verhaltens (5) des Fahrzeugs beim Radeinschlag, der es ermöglicht, die Längskoordinate (x_{R}) des augenblicklichen Drehpunkts des Fahrzeugs ausgehend von der Geschwindigkeit des Fahrzeugs (V) und von einer charakteristischen Regel des dynamischen Gleichgewichts des Fahrzeugs zu bestimmen,
• einen Block (433) der Bestimmung des Steuerwinkels (α) jedes der gelenkten Räder ausgehend von der Längs- und Querkoordinate (x_{R}, y_{R}) des augenblicklichen Drehpunkts (CIR).

2. System nach Anspruch 1, bei dem die charakteristische Regel des dynamischen Gleichgewichts des Fahrzeugs die Berechnung einer Anschlusskurve (C1) zwischen einem Anfangsdrehpunkt (CIR₀) bei Geschwindigkeit Null und einem augenblicklichen Übergangsdrehpunkt (xₜ, yₜ) mit einer Übergangsgeschwindigkeit (Vₜ) aufweist, wobei die Anschlusskurve eine Gerade (C2) parallel zu einer Achse des Fahrzeugs tangiert, und bei dem die Längskoordinate (x_{R}) des augenblicklichen Drehpunkts des Fahrzeugs durch Ablesen der Querkoordinate (y_{R}) an einer Stelle bestimmt wird, die die Anschlusskurve und die Gerade parallel zu einer Achse des Fahrzeugs für jede Geschwindigkeit (V) des Fahrzeugs unterhalb der Übergangsgeschwindigkeit (Vₜ) enthält, und bei dem die Längskoordinate (x_{R}) des augenblicklichen Drehpunkts des Fahrzeugs gleich einer Längskoordinate (xₐ) ist, die von der Geschwindigkeit (V) des Fahrzeugs oberhalb der Übergangsgeschwindigkeit (Vₜ) abhängt.

3. System nach Anspruch 2, bei dem die Anschlusskurve (C1) eine Ellipse ist.

4. System nach Anspruch 1, bei dem die charakteristische Regel des dynamischen Gleichgewichts des Fahrzeugs die Wahl eines maximalen Querbeschleunigungswerts (γ _{y max}) des Fahrzeugs enthält.

5. System nach Anspruch 2 oder 3, bei dem die Querkoordinate (yₜ) des augenblicklichen Drehpunkts bei der Übergangsgeschwindigkeit unter Verwendung der Wahl eines maximalen Querbeschleunigungswerts (γ _{y max}) des Fahrzeugs und der Übergangsgeschwindigkeit (Vₜ) in der charakteristischen Regel des dynamischen Gleichgewichts des Fahrzeugs bestimmt wird.

6. System nach Anspruch 4 oder 5, bei dem der maximale Querbeschleunigungsparameter (γ _{y max}) ein Einstellparameter des Systems ist und während des Betriebs des Lenksystems einen festen Wert beibehält.

7. System nach Anspruch 4 oder 5, bei dem der maximale Querbeschleunigungsparameter (γ _{y max}) in Echtzeit abhängig von den Nutzungsbedingungen des Fahrzeugs berechnet wird.

8. System nach einem der Ansprüche 1 bis 7, bei dem, da das Steuerorgan innerhalb eines maximalen Bereichs (θₘₐₓ) zwischen einem linken Anschlag und einem rechten Anschlag betätigt werden kann, das Steuergerät (4) aufweist:
• eine erste Einheit (41), um mindestens in Abhängigkeit von der Geschwindigkeit des Fahrzeugs (V) einen maximalen Einschlagwinkel (βₘₐₓ) am einzigen gelenkten Rad eines äquivalenten Zweiradmodells des Fahrzeugs zu bestimmen,
• eine zweite Einheit (42), um ein Untersetzungsverhältnis (RD) in Abhängigkeit vom maximalen Bereich (θₘₐₓ) des Steuerorgans und vom maximalen Einschlagwinkel (βₘₐₓ) zu bestimmen,
wobei die Endeinheit (43) den oder die Einschlagwinkel (α) in Abhängigkeit vom Untersetzungsverhältnis (RD) bestimmt.

9. System nach einem der Ansprüche 1 bis 8 für ein Fahrzeug mit vier Rädern, die alle gelenkte Räder (1_{AvG}, 1_{AvD}, 1_{ArG}, 1_{ArD}) sind, die auf jeder der Achsen beim Einschlag mechanisch miteinander verbunden sind, wobei das System einen einzigen Aktor pro Achse (3_{Av}, 3_{Ar}) aufweist, wobei der Block (433) zur Bestimmung des Steuerwinkels (α) jedes der gelenkten Räder ausgehend von der Quer- und Längskoordinate des augenblicklichen Drehpunkts den Steuerwinkel (α_{Av} und α_{Ar}) jeder der Lenkachsen bestimmt.

10. System nach einem der Ansprüche 1 bis 8 für ein Fahrzeug, bei dem alle Räder gelenkte Räder (1_{AvG}, 1_{AvD}, 1_{ArG}, 1_{ArD}) sind, wobei das System einen Aktor pro gelenktes Rad (3_{AvG}, 3_{AvD}, 3_{ArG}, 3_{ArD}) aufweist, wobei der Block (433) zur Bestimmung des Steuerwinkels (α) jedes der gelenkten Räder ausgehend von der Quer- und Längskoordinate des augenblicklichen Drehpunkts den Steuerwinkel (α_{1AvG}, α_{1AvD}, α_{1ArG} und α_{1AvD}) jedes der gelenkten Räder bestimmt.

11. System nach einem der Ansprüche 1 bis 10, bei dem das dem Fahrer zur Verfügung stehende Steuerorgan, um eine Radeinschlaganforderung einzugeben, ein elektrisches Signal (θ) des geforderten Radeinschlags liefert, bei dem jeder der Aktoren (3) elektrisch ist.

12. System zur Spursteuerung eines Fahrzeugs, bei dem das Spursteuergerät den Steuerwinkeln (α), die von einem Lenksteuerungssystem nach einem der Ansprüche 1 bis 11 bestimmt werden, mögliche Korrektive überlagert, die von einer Spursteuerfunktion bestimmt werden, und den korrigierten Einschlagwinkel für jedes der Räder bestimmt, wobei der korrigierte Radeinschlagwinkel eine Komponente enthält, die aus dem Signal (θ) des geforderten Radeinschlags und einer Korrekturkomponente resultiert.
